# FASCICULE DE BREVET EUROPEEN

(11) **EP 2 776 280 B1**
(45) Date de publication et mention de la délivrance du brevet: **09.12.2015**
(21) Numéro de dépôt: 12773041.4
(22) Date de dépôt: 14.09.2012
(51) Int. Cl.: B60R 5/04

(54) **VEHICULE A COMPARTIMENT A BAGAGES DOTE D'UN TENDELET ESCAMOTABLE**
FAHRZEUG MIT EINEM GEPÄCKRAUM MIT EINKLAPPBARER ÜBERDACHUNG
VEHICLE WITH A LUGGAGE COMPARTMENT PROVIDED WITH A RETRACTABLE CANOPY

(30) Priorité: 10.11.2011 FR 1160234
(43) Date de publication de la demande: 17.09.2014
(73) Titulaire: Renault S.A.S., 92100 Boulogne-Billancourt (FR)
(72) Inventeur: LEGRAND, Jean-Pierre, F-28300 Berchere Saint Germain (FR); HOLLEVILLE, Francis, F-78470 Saint Remy Les Chevreuse (FR)
(86) Numéro de dépôt international: PCT/FR2012/052063
(87) Numéro de publication internationale: WO 2013/079835

(56) Documents cités:
- DE-A1- 10 223 682
- DE-A1-102009 010 967
- DE-U1- 20 019 704
- DE-U1-202007 017 955
- FR-A1- 2 909 614

## Description

La présente invention concerne un agencement de coffre de véhicule automobile à tendelet.

On connaît par le document FR 2942181 un véhicule comprenant un habitacle, un compartiment à bagage, un plancher de compartiment à bagages et un tendelet déplaçable entre une position dans laquelle il recouvre le compartiment à bagage et une position dans laquelle il est replié ou enroulé sur lui-même et fixé de façon détachable sur un support ; le véhicule comporte un bac de rangement du tendelet s'étendant au niveau inférieur du compartiment à bagage transversalement à l'axe longitudinal du véhicule et apte à loger le tendelet à l'état replié ou enroulé sur lui-même. Dans ce document, le bac de rangement s'étend de préférence à l'arrière du compartiment à bagage pour que l'utilisateur puisse, plus ou moins facilement, détacher le tendelet de son support et disposer le tendelet replié manuellement dans le bac de rangement. Le poids et l'encombrement du tendelet rendent toutefois cette manoeuvre incommode pour certaines personnes.

DE102009010967 montre un véhicule comprenant un habitacle, un compartiment à bagage, un plancher de compartiment à bagage et un tendelet replié sur lui-même et fixé sur un support au moins dans une position haute dans laquelle le tendelet est en position d'utilisation, le véhicule comportant un bac de rangement du tendelet s'étendant au niveau inférieur du compartiment à bagage transversalement à l'axe longitudinal du véhicule et apte à loger le tendelet replié sur lui-même en position basse de rangement ainsi qu'une partie de préhension du tendelet, le support de tendelet étant lié au compartiment à bagage et mobile entre une position haute dans laquelle le tendelet est en position haute d'utilisation et une position basse dans laquelle le tendelet est en position basse de rangement, où le support est un support articulé pivotant, constitué par au moins un bras articulé sur un axe horizontal et est susceptible de pivoter entre une position haute et une position basse.

Le but de l'invention est de faciliter le rangement du tendelet.

L'invention atteint son but grâce à un véhicule comprenant un habitacle, un compartiment à bagage, un plancher de compartiment à bagage et un tendelet replié sur lui-même et fixé sur un support au moins dans une position haute dans laquelle le tendelet est en position d'utilisation, le véhicule comportant un bac de rangement du tendelet s'étendant au niveau inférieur du compartiment à bagage transversalement à l'axe longitudinal du véhicule et apte à loger le tendelet replié sur lui- même en position basse de rangement, caractérisé en ce que le support de tendelet est lié au compartiment à bagage et est mobile entre une position haute dans laquelle le tendelet est en position haute d'utilisation et une position basse dans laquelle le tendelet est en position basse de rangement.

Ainsi selon l'invention, il n'est plus besoin de détacher le tendelet de son support pour le faire passer de sa position haute à sa position basse, mais au contraire, le tendelet reste lié à son support et c'est celui-ci qui accompagne le mouvement du tendelet entre ses deux positions.

Le support est un support articulé pivotant, en particulier un support constitué par au moins un bras articulé sur un axe horizontal à mi-hauteur du compartiment à bagage et susceptible de pivoter entre une position haute et une position basse.

Le support est constitué de préférence par deux bras articulés parallèles disposés latéralement dans le compartiment à bagage, entre lesquels le tendelet est fixé horizontalement.

Le bac de rangement est avantageusement défini par un logement inférieur fermé par une trappe ouvrante située dans le plancher (ou faux-plancher) du compartiment à bagage. La trappe est avantageusement prévue dans la partie avant du compartiment à bagage. De cette manière, le dégagement nécessaire au mouvement d'escamotage, pendant la descente du tendelet et des bras, peut facilement être pris vers l'avant du véhicule en abaissant les dossiers des sièges de la rangée devant le coffre.

Il est avantageusement prévu un mécanisme d'ouverture synchronisée de la trappe lié au mouvement du support de tendelet, par exemple une bielle cinématiquement liée au mécanisme pivotant du ou des bras articulés de support ; ce mécanisme permet l'ouverture synchronisée de la trappe quand le support portant le tendelet passe de la position haute à la position basse. Le mécanisme d'ouverture de la trappe comprend avantageusement un dispositif de débrayage de sécurité s'opposant à la l'ouverture en force de la trappe si celle-ci est chargée au moment de son ouverture.

La manoeuvre du support et du tendelet de sa position haute à sa position basse se fait avantageusement par simple gravité.

Le pivotement du support et du tendelet autour de l'axe horizontal est effectué vers l'avant du véhicule. Ainsi il n'est pas nécessaire de décharger le compartiment à bagage préalablement à la manoeuvre du support et du tendelet, lorsque des objets divers sont disposés dans le compartiment.

On prévoit avantageusement un dispositif de freinage pour ralentir et réguler la descente et, dans le cas de deux bras de support, pour mieux synchroniser le mouvement des bras.

Il est prévu en position haute du support et du tendelet un mécanisme de verrouillage dégageable par un organe de manoeuvre tel qu'un bouton ou un levier.

D'autres caractéristiques et avantages de l'invention ressortiront de la description suivante d'un exemple de réalisation. Il sera fait référence aux dessins annexés sur lesquels :
- la figure 1 est une vue en perspective de trois-quarts depuis l'arrière du véhicule, laissant voir le compartiment à bagage ouvert, avec son tendelet en position haute.
- la figure 2 est un schéma du support pivotant de tendelet et du mécanisme synchronisé d'ouverture de la trappe de plancher.
- la figure 3 est une vue de détail du mécanisme de verrouillage pour l'accrochage et la libération du support pivotant de tendelet de la figure 2.
- la figure 4 est une vue de détail du dispositif de liaison débrayable du mécanisme synchronisé d'ouverture de la trappe de plancher.
- la figure 5 est une vue de détail du mécanisme de freinage établi sur la partie centrale de la bielle du support pivotant de tendelet et du mécanisme synchronisé d'ouverture de la trappe de plancher.
- les figures 6 à 9 sont des vues du support pivotant de tendelet et du mécanisme synchronisé d'ouverture de la trappe de la figure 2, à quatre étapes successives du mouvement d'escamotage du tendelet
- la figure 10 est une vue en perspective montrant le tendelet en position basse de rangement, le plancher du compartiment à bagages n'ayant pas été représenté.

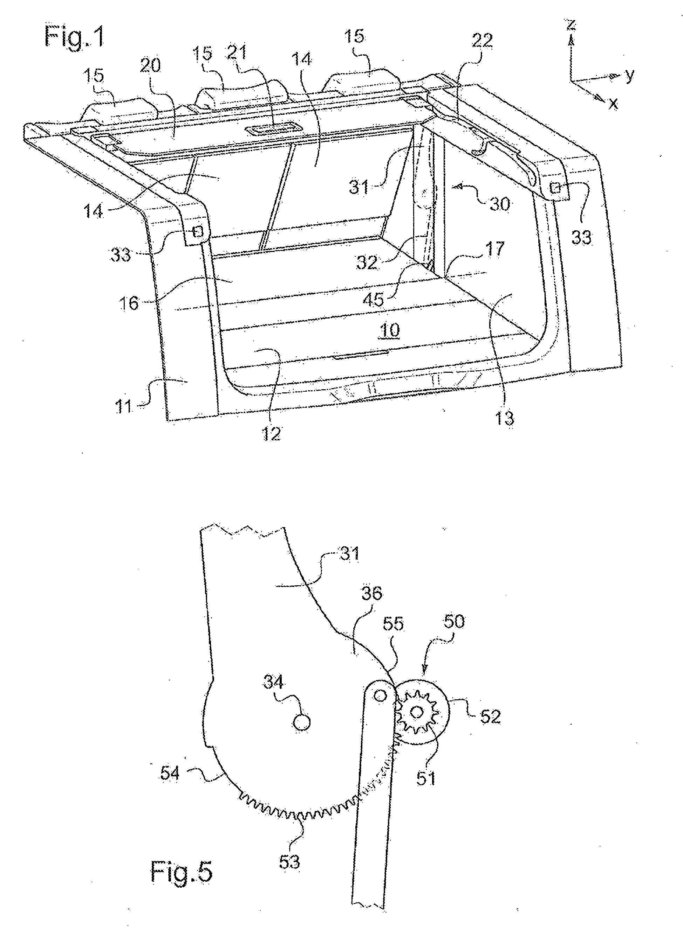

La description se réfère à l'orientation du trièdre de référence XYZ (figure 1) :
X = longitudinal véhicule, dirigé vers l'arrière.
Y = transversal au véhicule, dirigé vers la droite du véhicule
Z = vertical, dirigé vers le haut.

La figure 1 représente le compartiment à bagage ou coffre 10 d'un véhicule dont on ne voit ici que le cadre d'ouverture 11 de la face arrière. Le compartiment 10 est limité par un plancher ou faux-plancher horizontal 12, des parois latérales verticales 13 et, à l'avant, les dossiers relevés 14 de trois sièges 15 de deuxième rang (en général). Vers le haut du compartiment 10, un tendelet 20 s'étend transversalement, avec un voile enroulable qui peut être déroulé vers l'arrière grâce à la partie de préhension 21 ; les côtés de la partie de préhension peuvent être guidés dans des profils latéraux (ou rainures) 22 prévus en haut des parois latérales 13 avec plusieurs positionnements possibles pour cacher plus ou moins au regard le contenu du compartiment 10. Le tendelet est représenté ici à l'état replié sur lui-même. Ces dispositions sont connues en soi.

Le plancher 12 peut comprendre plusieurs panneaux mobiles ou trappes, afin d'accéder à des logements situés sous ce plancher, par exemple pour accéder à une roue de secours.

Le plancher 12 conforme à l'invention comprend à l'avant une trappe 16 articulée sur un axe horizontal transversal 17 (parallèle à la direction Y), la trappe pouvant s'ouvrir vers le haut à l'avant du compartiment, c'est-à-dire du côté des sièges 15.

La figure 1 montre en pointillés l'un des mécanismes 30 pour le support et l'escamotage du tendelet et pour l'ouverture synchronisée de trappe qui seront décrits plus loin, comportant notamment un bras articulé 31 de support de tendelet 20 et une bielle 32 de soulèvement de trappe 16.

Enfin, la figure 1 montre de chaque côté du compartiment un bouton de déverrouillage 33 des supports 31 de tendelet.

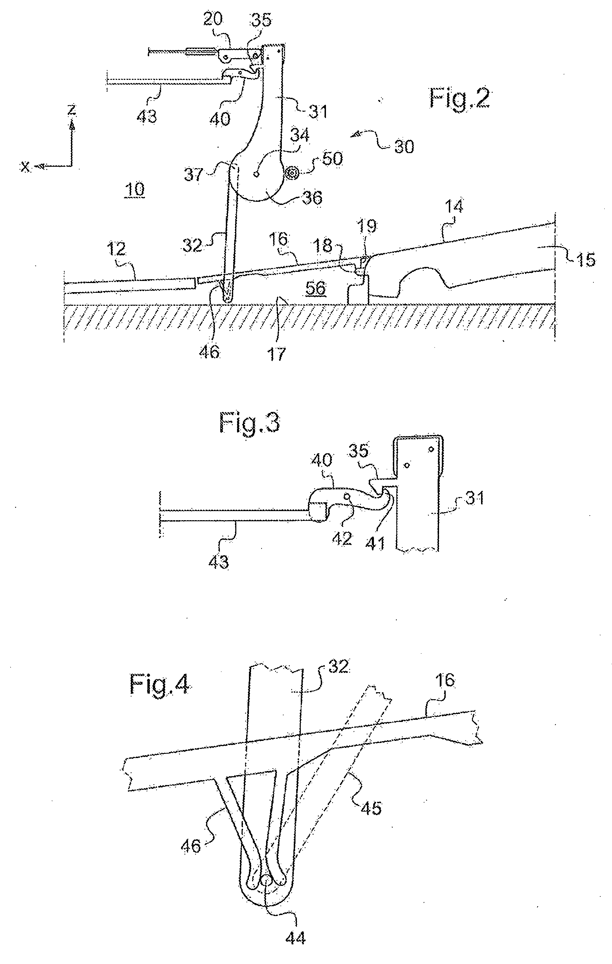

Le principe du mécanisme de support et d'entraînement 30 du tendelet et d'ouverture synchronisée de la trappe 16 va être exposé en référence à la figure 2 qui montre un bras de support 31 monté pivotant sur un arbre transversal 34 situé environ à mi-hauteur du compartiment à bagage. Dans cette position haute des bras 31, ceux-ci sont sensiblement verticaux et le tendelet 20 replié sur lui-même est maintenu horizontal entre les deux bras 31 et vers l'arrière des bras. Chaque bras 31 ou au moins l'un des bras 31 comporte par ailleurs vers l'arrière un crochet 35 qui peut venir s'encliqueter derrière le bec 41 d'un verrou basculant 40 (cf. le détail figure 3), pivotant sur un axe transversal 42, et dont le basculement de libération est commandé par une tige 43 s'étendant vers l'arrière jusqu'au bouton de déverrouillage 33. Quand l'utilisateur appuie sur le bouton 33, le verrou 40 bascule et libère le crochet 35 du bras 31 qui est alors libre de son mouvement. Un dispositif élastique non représenté, en caoutchouc ou à ressort, contraint légèrement le bras 31 vers l'avant quand il est engagé dans le verrou 40, de sorte que le déverrouillage entraîne automatiquement une certaine propulsion du bras 31 vers l'avant (en direction opposée à X).

Autour de l'axe 34, le bras 31 comporte une partie sensiblement en forme de disque circulaire 36. Un axe 37 est fixé, excentré, sur ce disque 36 et sert d'articulation à l'extrémité d'une bielle 32 de soulèvement de la trappe 16 de plancher de coffre.

La figure 2 montre aussi le fond de caisse 17 au-dessus duquel le plancher 12 et la trappe 16 se trouvent. À l'avant du compartiment 10, les dossiers 14 de sièges 15 ont été rabattus ; dans ce mouvement, un ergot 18 au bas des dossiers a pivoté et s'est engagé avec le bord avant 19 de la trappe 16 et l'a légèrement soulevé de sorte que le plancher présente une surface de chargement continue entre l'arrière du plancher 12, la trappe 16 et les dossiers rabattus 14 de siège. Sous la trappe 16 un espace 56 permettra ultérieurement le rangement du tendelet 20 entre le fond de caisse et la trappe 16.

La bielle 32 comporte à sa base un axe court transversal 44 (cf. aussi le détail de la figure 4) qui d'une part est guidé dans une lumière oblique 45 formée dans la paroi latérale 13 du coffre (cf. aussi figure 1) au niveau de l'habillage du mécanisme 30 de l'invention, et d'autre part peut soulever une pince d'entraînement 46 fixée sous la trappe 16. Cette pince 46 comporte deux bras élastiques séparés par une partie renflée qui définit une butée pour l'axe 44. En situation normale, l'axe 44 se loge dans l'extrémité des deux bras élastiques, sous la butée, et le mouvement plus ou moins vertical de l'axe 44 permet d'entraîner vers le haut la pince 46 et donc de faire basculer la trappe 16. Le mouvement inverse de descente de l'axe 44 s'accompagne de la fermeture de la trappe 16 sous son propre poids et éventuellement par l'entraînement de la pince 46 par l'axe 44 si ce dernier est élastiquement fixé dans ladite pince 46 (ce qui n'est pas nécessaire). En situation anormale, par exemple si la trappe 16 est bloquée par un bagage (alors qu'elle devrait en principe être laissée libre) et ne doit donc pas être levée en force, un déclenchement intempestif du mécanisme d'escamotage 30 entraînera l'axe 44 vers le haut normalement, celui-ci écartera en force les bras élastiques de la pince 46 et passera au-delà du renflement de butée pour poursuivre son mouvement ascendant de sorte que cela bloquera le mécanisme 30 et indiquera à l'utilisateur qu'une manoeuvre anormale a eu lieu, à charge pour lui de régler le problème en dégageant le bagage qui encombre le plancher et en remettant les éléments dans leur situation respective normale. La pince 46 sert donc de mécanisme élastique de débrayage de sécurité pour la liaison entre la bielle 32 et la trappe 16 : une liaison entièrement rigide conduirait en effet à un risque de casse lors de l'ouverture de la trappe si celle-ci est chargée ou bloquée. On peut concevoir d'autres formes de mécanismes de débrayage élastique, par exemple en interposant une section élastique (un ressort) sur la bielle elle-même qui se comprime au-delà d'un effort excessif.

La figure 2 indique sommairement un mécanisme de freinage ou ralentisseur 50 détaillé sur la figure 5. Celui-ci est un mécanisme du commerce qui comprend une roue dentée 51 de freinage qui tourne de manière freinée dans un bain visqueux (huile de silicone) contenu dans le boîtier 52, la roue 51 étant freinée dans un sens de rotation seulement et passant en roue libre dans l'autre sens. La roue dentée de freinage 51 engrène sur des dents 53 disposées sur une partie de la circonférence du disque 36 du bras 31, des parties sans dents telles que les parties 54 et 55 étant prévues pour que l'engrenage de freinage par le ralentisseur 50 n'ait lieu que sur des angles déterminés de la rotation du bras 31, en pratique à partir d'une quinzaine de degrés sur la verticale en position haute et en position basse des bras.

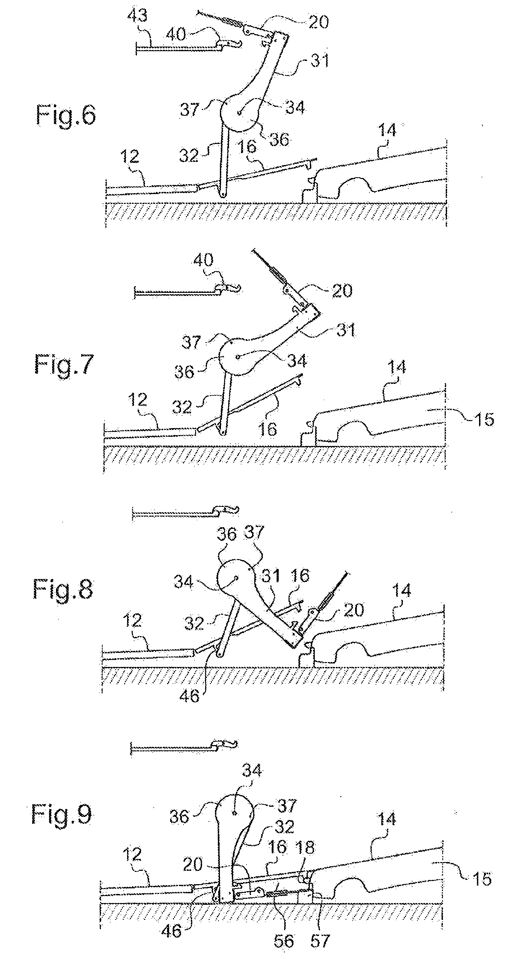

Ayant maintenant décrit le mécanisme d'escamotage de tendelet et de soulèvement de trappe, on va en expliquer la cinématique en se reportant aux figures 6 à 9 qui montrent les différentes positions prises par le mécanisme après la libération du verrouillage montré en figure 2.

Dans la figure 6, on voit que le bras 31 et le tendelet 20 qui lui est attaché s'est propulsé vers l'avant, sous l'effet de la contrainte élastique associée au dispositif de verrouillage qui vient d'être libéré. Dans sa rotation, le bras 31 a entraîné par le disque 34 l'axe excentré 37 vers le haut, ce qui donc commence à soulever la trappe 16, grâce à la poussée de l'axe 44 (non visible sur la figure 6) sur la pince 46 (également non visible).

Sur la figure 7, sous son propre poids et celui du tendelet 20, le bras 31 continue de pivoter vers l'avant en entraînant avec lui le tendelet 20, et d'autre part, via la bielle 32, la trappe 16 qui s'ouvre à son niveau d'ouverture maximum quand l'axe 37 est en haut du disque 36. Le ralentisseur 50 non représenté sur ces figures est entré en jeu : il freine et synchronise le mouvement des deux bras 31.

Sur la figure 8, le bras 31 a continué sa rotation et a maintenant entraîné le tendelet 20 sous la trappe 16 toujours assez largement ouverte. À partir de cette position, le freinage du ralentisseur cesse, parce qu'on passe sur une zone sans dents du disque 36.

Enfin, en figure 9, la rotation du bras 31 s'est achevée, le bras prenant une position sensiblement verticale basse, le tendelet 20 étant placé horizontalement dans le logement 56 situé sous la trappe 16 qui s'est refermée et est en appui sur l'ergot arrière 18 de siège. Le tendelet 20 peut lui-même porter sur un gradin 57 prévu dans le logement 56.

Dans cette disposition, l'utilisateur peut profiter de tout le volume disponible du compartiment à bagages et des sièges rabattus 15.

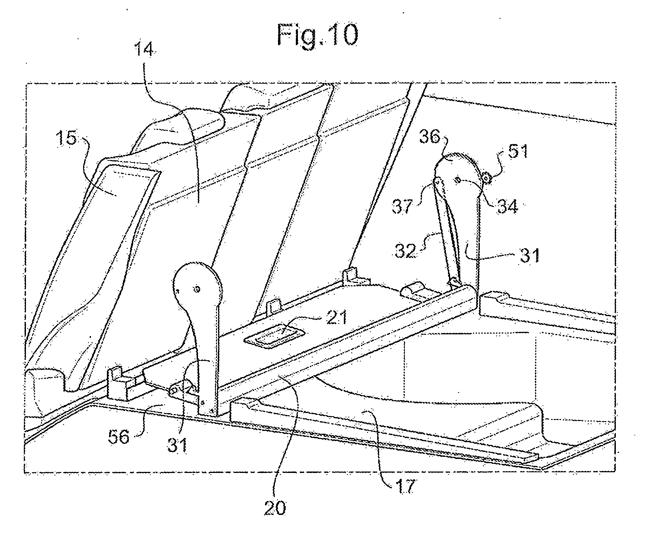

S'il le désire, l'utilisateur peut aussi relever les sièges 15. Dans ce cas, l'ergot 18 lié au dossier 14 pivote vers le bas et la trappe 16 repasse en position complètement horizontale. Dans cette position, l'espace 56 est minimal mais suffisant pour contenir le tendelet 20. La figure 10 montre cette position du tendelet 20, sans la trappe omise pour laisser voir les deux mécanismes latéraux 31 qui supportent le tendelet 20.

## Revendications

1. Véhicule comprenant un habitacle, un compartiment (10) à bagage, un plancher (12) de compartiment à bagage et un tendelet (20) replié sur lui-même et fixé sur un support (31) au moins dans une position haute dans laquelle le tendelet (20) est en position d'utilisation, le véhicule comportant un bac de rangement (56) du tendelet s'étendant au niveau inférieur du compartiment (10) à bagage transversalement à l'axe longitudinal du véhicule à partir d'une zone située à l'aplomb du support (31) lorsqu'il est en position haute, et apte à loger le tendelet (20) replié sur lui-même en position basse de rangement ainsi qu' une partie de préhension (21) du tendelet, le support (31) de tendelet étant lié au compartiment (10) à bagage et mobile entre une position haute dans laquelle le tendelet (20) est en position haute d'utilisation et une position basse dans laquelle le tendelet (20) est en position basse de rangement, où le support (31) est un support articulé pivotant, constitué par au moins un bras (31) articulé sur un axe horizontal (34) à mi-hauteur du compartiment (10) à bagage et est susceptible de pivoter entre une position haute et une position basse.

2. Véhicule selon la revendication 1, **caractérisé en ce que** le support (31) est constitué par deux bras articulés parallèles disposés latéralement dans le compartiment à bagage, entre lesquels le tendelet (20) est fixé horizontalement.

3. Véhicule selon la revendication 1 ou 2, **caractérisé en ce que** le bac de rangement (56) est défini par un logement inférieur fermé par une trappe ouvrante (16) située dans le plancher (12) du compartiment (10) à bagage.

4. Véhicule selon la revendication 3, **caractérisé en ce que** la trappe (16) est prévue dans la partie avant du compartiment (10) à bagage.

5. Véhicule selon l'une quelconque des revendications 3 ou 4, **caractérisé par** un mécanisme (36, 32, 44) d'ouverture synchronisée de la trappe (16) lié au mouvement du support (31) de tendelet.

6. Véhicule selon la revendication 5, **caractérisé par** un dispositif de débrayage de sécurité (44, 46) s'opposant à l'ouverture en force de la trappe (16) si celle-ci est chargée au moment de son ouverture.

7. Véhicule selon l'une quelconque des revendications 1 à 6, **caractérisé en ce que** la manoeuvre du support (31) et du tendelet (20) de sa position haute à sa position basse se fait par simple gravité.

8. Véhicule selon l'une quelconque des revendications 1 à 7, **caractérisé en ce que** le pivotement du support (31) et du tendelet (20) autour de l'axe horizontal (34) est effectué vers l'avant du véhicule.

9. Véhicule selon l'une quelconque des revendications 1 à 8, **caractérisé par** un dispositif de freinage (50) pour ralentir et réguler la descente du bras (31).

10. Véhicule selon l'une quelconque des revendications 1 à 9, **caractérisé par** un mécanisme de verrouillage en position haute du support (31) et du tendelet (20).

## Patentansprüche

1. Fahrzeug mit einem Innenraum, einem Gepäckraum (10), einem Boden (12) des Gepäckraums und einer auf sich selbst geklappten Abdeckung (20), die in mindestens einer oberen Stellung, in der sich die Abdeckung (20) in Gebrauchsstellung befindet, an einem Träger (31) befestigt ist, wobei das Fahrzeug ein Staufach (56) für die Abdeckung, das sich von einem in der Lotrechten des Trägers (31), wenn dieser sich in der oberen Stellung befindet, befindlichen Bereich auf der unteren Ebene des Gepäckraums (10) quer zur Längsachse des Fahrzeugs erstreckt und die Abdeckung (20) aufnehmen kann, die in der unteren Staustellung auf sich selbst geklappt ist, sowie ein Teil (21) zum Ergreifen der Abdeckung umfasst, wobei der Träger (31) der Abdeckung mit dem Gepäckraum (10) verbunden ist und zwischen einer oberen Stellung, in der sich die Abdeckung (20) in der oberen Gebrauchsstellung befindet, und einer unteren Stellung, in der sich die Abdeckung (20) in der unteren Staustellung befindet, beweglich ist, wobei der Träger (31) ein angelenkter Schwenkträger ist, der durch mindestens einen Arm (31) gebildet wird, welcher auf halber Höhe des Gepäckraums (10) an einer horizontalen Achse (34) angelenkt ist und zwischen einer oberen Stellung und einer unteren Stellung schwenken kann.

2. Fahrzeug nach Anspruch 1, **dadurch gekennzeichnet, dass** der Träger (31) durch zwei parallele angelenkte Arme gebildet wird, die in dem Gepäckraum lateral angeordnet sind und zwischen denen die Abdeckung (20) horizontal fixiert ist.

3. Fahrzeug nach Anspruch 1 oder 2, **dadurch gekennzeichnet, dass** das Staufach (56) durch eine untere Aufnahme definiert wird, die durch eine zu öffnende Klappe (16) geschlossen ist, welche sich im Boden (12) des Gepäckraums (10) befindet.

4. Fahrzeug nach Anspruch 3, **dadurch gekennzeichnet, dass** die Klappe (16) im vorderen Teil des Gepäckraums (10) vorgesehen ist.

5. Fahrzeug nach Anspruch 3 oder 4, **gekennzeichnet durch** einen Mechanismus (36, 32, 44) zum synchronisierten Öffnen der Klappe (16), der mit der Bewegung des Trägers (31) der Abdeckung verbunden ist.

6. Fahrzeug nach Anspruch 5, **gekennzeichnet durch** eine Sicherheitsausrückvorrichtung (44, 46), die dem Öffnen der Klappe (16) unter Kraftaufwand entgegenwirkt, wenn diese bei ihrem Öffnen belastet wird.

7. Fahrzeug nach einem der Ansprüche 1 bis 6, **dadurch gekennzeichnet, dass** die Betätigung des Trägers (31) und der Abdeckung (20) aus ihrer oberen Stellung in ihre untere Stellung einfach durch Schwerkraft erfolgt.

8. Fahrzeug nach einem der Ansprüche 1 bis 7, **dadurch gekennzeichnet, dass** das Schwenken des Trägers (31) und der Abdeckung (20) um die horizontale Achse (34) zum vorderen Ende des Fahrzeugs hin erfolgt.

9. Fahrzeug nach einem der Ansprüche 1 bis 8, **gekennzeichnet durch** eine Bremsvorrichtung (50) zum Verlangsamen und Steuern des Absenkens des Arms (31).

10. Fahrzeug nach einem der Ansprüche 1 bis 9, **gekennzeichnet durch** einen Mechanismus zur Verriegelung des Trägers (31) und der Abdeckung (20) in der oberen Stellung.

## Claims

1. Vehicle comprising a passenger compartment, a luggage compartment (10), a luggage compartment floor (12) and a canopy (20) which is folded up and attached to a support (31) at least in an upper position in which the canopy (20) is in the position of use, the vehicle comprising a stow tray (56) for the canopy which extends at the lower level of the luggage compartment (10), transversely to the longitudinal axis of the vehicle from a region vertically in line with the support (31) when it is in the upper position, and able to house the canopy (20) which is folded up in the lower stowed position and also a gripping part (21) of the canopy, the canopy support (31) being connected to the luggage compartment (10) and able to move between an upper position in which the canopy (20) is in the upper position of use and a lower position in which the canopy (20) is in the lower stowed position, wherein the support (31) is a pivoting articulated support consisting of at least one arm (31) which is articulated on a horizontal spindle (34) at half the height of the luggage compartment (10) and is able to pivot between an upper position and a lower position.

2. Vehicle according to Claim 1, **characterized in that** the support (31) consists of two parallel articulated arms which are arranged laterally in the luggage compartment and between which the canopy (20) is attached horizontally.

3. Vehicle according to Claim 1 or 2, **characterized in that** the stow tray (56) is defined by a lower cavity which is closed by means of an opening trapdoor (16) located in the floor (12) of the luggage compartment (10).

4. Vehicle according to Claim 3, **characterized in that** the trapdoor (16) is provided in the forward portion of the luggage compartment (10).

5. Vehicle according to either one of Claims 3 and 4, **characterized by** a mechanism (36, 32, 44) for the synchronized opening of the trapdoor (16), which mechanism is connected to the movement of the canopy support (31).

6. Vehicle according to Claim 5, **characterized by** an emergency disengagement device (44, 46) which opposes the forced opening of the trapdoor (16) if the latter is loaded when opened.

7. Vehicle according to any one of Claims 1 to 6, **characterized in that** the support (31) and the canopy (20) are moved from their upper position to their lower position simply by gravity.

8. Vehicle according to any one of Claims 1 to 7, **characterized in that** the support (31) and the canopy (20) pivot about the horizontal spindle (34) toward the front of the vehicle.

9. Vehicle according to any one of Claims 1 to 8, **characterized by** a braking device (50) in order to slow and control the descent of the arm (31).

10. Vehicle according to any one of Claims 1 to 9, **characterized by** a mechanism for locking the support (31) and the canopy (20) in the upper position.
